(19) Europäisches Patentamt
European Patent Office
Office européen des brevets

(11) EP 3 091 834 B1

(12) **EUROPEAN PATENT SPECIFICATION**

(45) Date of publication and mention of the grant of the patent:
**02.01.2019 Bulletin 2019/01**

(21) Application number: **15700645.3**

(22) Date of filing: **05.01.2015**

(51) Int Cl.:
*A01N 43/18* (2006.01) *A01N 43/88* (2006.01)
*A01N 43/50* (2006.01) *A01P 13/00* (2006.01)

(86) International application number:
**PCT/EP2015/050061**

(87) International publication number:
**WO 2015/104243 (16.07.2015 Gazette 2015/28)**

(54) **HERBICIDAL MIXTURE COMPRISING IMAZETHAPYR AND CYCLOXYDIM**

HERBIZIDMISCHUNG ENTHALTEND IMAZETHAPYR UND CYCLOXYDIM

MÉLANGE HERBICIDE COMPRENANT DE L'IMAZÉTHAPYR ET CYCLOXYDIM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2014 US 201461924722 P**
**11.02.2014 EP 14154655**

(43) Date of publication of application:
**16.11.2016 Bulletin 2016/46**

(73) Proprietor: **BASF Agrochemical Products B.V.**
**6835 EA Arnhem (NL)**

(72) Inventors:
- **ZAGAR, Cyrill**
**Raleigh, NC 27608 (US)**
- **BEGLIOMINI, Edson**
**239405 Singapore (SG)**
- **BEOHAR, Abhishek**
**482004 Jabalpur (IN)**
- **OTURKAR, Yogesh**
**400081 Mumbai (IN)**
- **RATHORE, Yogendra**
**453771 Indore (IN)**
- **CHANDOLA, Ajay**
**246149 Kotwara (IN)**
- **SANYAL, Nilanjan**
**700056 Kolkata (IN)**
- **GANIGER, Satish**
**038987 Singapore (SG)**
- **KANDRU, Sudhakar**
**67433 Neustadt (DE)**

(56) References cited:
**WO-A1-2008/071714 US-A1- 2011 065 579**
**US-B1- 6 534 444 US-B1- 7 105 470**

- **J. D Vyn ET AL: "Control of herbicide-resistant common waterhemp (Amaranthus tuberculatusvar.rudis) with pre- and post-emergence herbicides in soybean", Canadian Journal of Plant Science, 1 January 2007 (2007-01-01), pages 175-182, XP055171148, DOI: 10.4141/P06-016 Retrieved from the Internet: URL:http://pubs.aic.ca/doi/pdf/10.4141/P06 -016**
- **DA SILVA WILSON ET AL: "Potential use of herbicide mixtures in the control of weeds in alfalfa", REVISTA CERES, UNIVERSIDADE RURAL DO ESTADO DE MINAS GERAIS, VICOSA, BR, vol. 52, no. 299, 1 January 2005 (2005-01-01), pages 23-32, XP009176986, ISSN: 0034-737X**
- **HALVANKAR G B ET AL: "Effect of herbicides on weed dynamics and yield of soybean", JOURNAL OF MAHARASHTRA AGRICULTURAL UNIVERSITIES, POONA AGRICULTURAL COLLEGE, IN, vol. 30, no. 1, 1 January 2005 (2005-01-01), pages 35-37, XP009176971, ISSN: 0378-2395**
- **MEENA K S ET AL: "Performance of different herbicides on weed management, growth, yield and productivity of soybean (Glycine max (L.) Merill.)", ENVIRONMENT AND ECOLOGY, MKK PUBLICATION, CALCUTTA, IN, vol. 30, no. 3, 1 September 2012 (2012-09-01), pages 467-469, XP009176959, ISSN: 0970-0420**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**(Cont. next page)**

- FEDORUK L K ET AL: "The critical period of weed control for lentil in western Canada", WEED SCIENCE, WEED SCIENCE SOCIETY OF AMERICA, CHAMPAIGN, IL, US, vol. 59, no. 4, 1 January 2011 (2011-01-01), pages 517-526, XP009176961, ISSN: 0043-1745
- DATABASE CA [Online] CHEMICAL ABSTRACTS SERVICE, COLUMBUS, OHIO, US; ADAMCZEWSKI, K. ET AL: "Annual and perennial grass weed control in oilseed rape, peas and lupines with post-emergence graminicides", XP002736268, retrieved from STN Database accession no. 1988:145348 & ADAMCZEWSKI, K. ET AL: "Annual and perennial grass weed control in oilseed rape, peas and lupines with post-emergence graminicides", PROCEEDINGS - BRITISH CROP PROTECTION CONFERENCE--WEEDS , (3), 845-50 CODEN: PBCWDF; ISSN: 0144-1604, 1987,

## Description

### Field of the invention

The present invention relates to herbicidally active compositions, which comprise 5-ethyl-2-[(RS)-4-isopropyl-4-methyl-5-oxo-2-imidazolin-2-yl]nicotinic acid (common name: imazethapyr) and (5RS)-2-[(EZ)-1-(Ethoxyimino)butyl]-3-hydroxy-5-[(3RS)-thian-3-yl]cyclohex-2-en-1-one (common name: cycloxydim) and optionally 2-[(RS)-4-isopropyl-4-methyl-5-oxo-2-imidazolin-2-yl]-5-methoxymethylnicotinic acid (common name: imazamox).

Further, the invention relates to herbicidally active compositions comprising imazethapyr, cycloxydim and bentazone and optionally imazamox.

### Background of the invention

In crop protection, it is desirable in principle to increase the specificity and the reliability of the action of active compounds. In particular, it is desirable for the crop protection product to control the harmful plants effectively and, at the same time, to be tolerated by the useful plants in question.

5-ethyl-2-[(RS)-4-isopropyl-4-methyl-5-oxo-2-imidazolin-2-yl]nicotinic acid (common name: imazethapyr; formula I) is an active compound from the group of imidazolinone herbicides, which are known e.g. from Shaner, D. L., O' Conner, S.L, The Imidazolinone Herbicides, CRC Press Inc., Boca Raton, Florida 1991 and also from The Compendium of Pesticide Common Names http://www.alanwood.net/pesticides/.

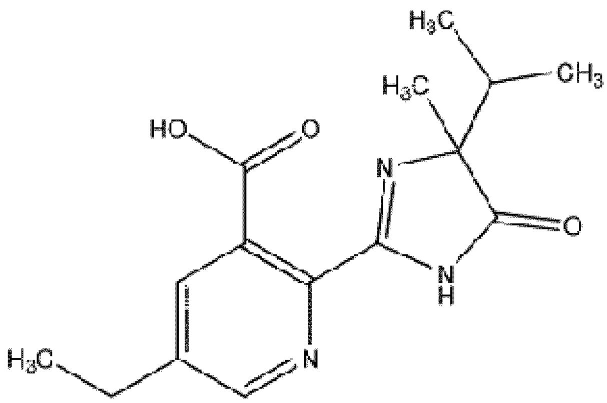

I

(5RS)-2-[(EZ)-1-(Ethoxyimino)butyl]-3-hydroxy-5-[(3RS)-thian-3-yl]cyclohex-2-en-1-one (common name: cycloxydim; formula II) is an active compound from the group of cyclohexanedione herbicides.

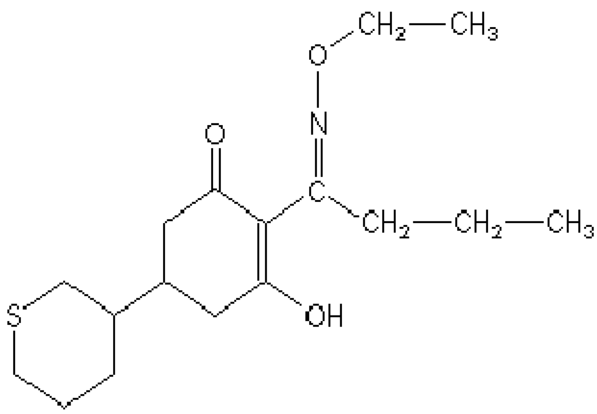

II

2-[(RS)-4-isopropyl-4-methyl-5-oxo-2-imidazolin-2-yl]-5-methoxymethylnicotinic acid (common name: imazamox; formula III) is an active compound from the group of imidazolinone herbicides, which are known e.g. from Shaner, D. L. O' Conner, S.L The Imidazolinone Herbicides, CRC Press Inc., Boca Raton, Florida 1991 and also from The Compendium of Pesticide Common Names http://www.alanwood.net/pesticides/.

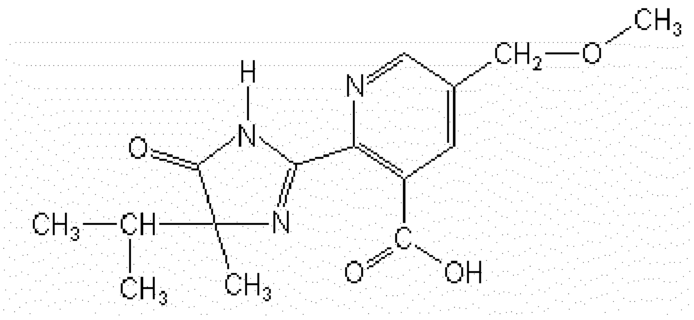

III

3-isopropyl-1H-2,1,3-benzothiadiazin-4(3H)-one 2,2-dioxide (common name: bentazone; formula IV) is an active compound from the group of thiadiazine herbicides.

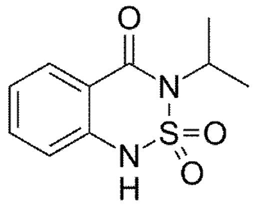

IV

Although both imazethapyr and combinations of imazethapyr with imazamox (for example commercialized under the Odyssey® brand) are highly effective pre- and post-emergence herbicides, in some cases they do not provide a sufficient control of the relevant harmful plants and their activity at low application rates is not always satisfactory. Apart from that, its compatibility with certain dicotyledonous crop plants such as soybean, peanuts or other pulse or leguminous crops is not always satisfactory, i.e. in addition to the harmful plants, the crop plants are also damaged to an extent which is not acceptable. Though it is in principle possible to spare crop plants by lowering the application rates, the extent of the control of harmful plants is naturally also reduced.

US 6,534,444 B1 describes synergistic herbicidal mixtures comprising at least one benzoyl compound (A) and a synergistically effective amount of at least one further herbicidal compound (B) and their use for controlling undesired plants. Neither imazethapyr or imazamox nor cycloxydim falls within the definition of a benzoyl compound according to US 6,534,444 B1.

WO 2008/071714 A1 describes synergistic agrochemical mixtures comprising 1-methylcyclopropene and at least one further active compound and their use for improving agricultural plant health. WO 2008/071714 A1 does not describe a herbicidal mixture according to the invention comprising imazethapyr, cycloxydim and imazamox.

US 7,150,470 B1 describes synergistic herbicidal combinations of broad-spectrum herbicides (A) and further herbicides (B). However, a specific combination of imazethapyr, cycloxydim and optionally imazamox is not described.

Vyn et al. (Can. J. Plant Sci. (2007), pages 175-182, DOI: 10.414/P06-016) describes the control of herbicide-resistant common waterhemp with pre- and post-emergence herbicides in soybean. A herbicidal mixtures comprising imazethapyr, cycloxydim and optionally imazamox not described.

US 2011/0065579 A1 describes a herbicidal composition comprising glyphosate, glufosinate and their salts, pyroxasulfone and at least one further herbicide. Again, the synergistic mixture according to the present invention is not described.

Da Silva et al. (Revista Ceres, 52(299)23-32.2005) describes the use of herbicide mixtures in the control of weeds in alfalfa. However, a herbicidal mixture comprising cycloxydim is not described.

Halvankar et al. (J. Maharashtra agric. Univ., 30 (1): 035-037 (2005)) describes the effect of herbicides on weed dynamics and yield of soybean but is silent with regard to a synergistic mixture comprising imazethapyr, cycloxydim and optionally imazamox.

Meena et al. (Environment & Ecology 30 (3): 467-469, (2012), pages 517-526, ISSN: 0970-0420) investigates the performance of different herbicides on weed management, growth, yield and productivity of soybean. Herbicidal mixtures according to the invention are not described.

Finally, Fedoruk et al. (Weed Science 2011 59:517-526) determines the critical period for weed control and suggests post residual herbicide treatment to maximize lentil yields. Fedoruk et al. is silent with regard to a synergistic herbicide mixture as described herein.

## Detailed description of the invention

It is an object of the present invention to provide herbicidal compositions, which show enhanced herbicide action against undesirable harmful plants, in particular against *Acalypha* species such as *Acalypha indica*, *Dinebra* species such as *Dinebra Arabica*, *Cynotis spec such* as *Cynotis axillaris*, *Parthenium spec such* as *Parthenium hysterophorus*, *Physalis spec such* as *Physalis minima*, *Digera spec such* as *Digera arvensis*, *Alopecurus myosuroides*, *Apera spicaventi*, *Brachiaria* spec. such as *Brachiaria deflexa* or *Brachiaria plantaginea*, *Echinochloa* spec. such as *Echinochloa colonum*, *Leptochloa* spec. such as *Leptochloa fusca*, *Rottboellia cochinchinensis, Digitaria sanguinalis, Eleusine indica, Saccharum spontaneum, Cynodon dactylon, Euphorbia hirta, Euphorbia geniculata, Commelina benghalensis, Commelina communis*, *certain undesired Oryza spec. such* as *weedy rice or red rice (Oryza sativa)*, *Phalaris spec. such* as *Phalaris canariensis*, *Celosia argentea*, *Xanthium strumarium*, *Papaver rhoeas*, *Geranium* spec, *Brassica* spec, *Avena fatua*, *Bromus* spec., *Lolium* spec., *Phalaris* spec., *Setaria* spec., *Digitaria* spec., *brachiaria* spec., *Amaranthus* spec., *Chenopodium* spec., *Abutilon theophrasti*, *Galium aparine*, *Veronica* spec., or *Solanum* spec. and/or to improve their compatibility with crop plants, such as soybean, peanut, pea, bean, lentil, green gram, black gram, cluster bean, fenugreek, other pulse or leguminous crops, or crops which are tolerant to the action of acetohydroxyacid synthase inhibiting herbicides, such as for example Clearfield@ wheat, Clearfield@ barley, Clearfield@ corn, Clearfield@ lentil, Clearfield@ oilseed rape or canola, Clearfield@ rice, Cultivance® soybean and/or Clearfield@ sunflower. The composition should also have a good pre-emergence herbicidal activity.

We consider this object to be achievable, by herbicidally active compositions comprising imazethapyr or agriculturally acceptable salts thereof and cycloxydim or agriculturally acceptable salts thereof and optionally imazamox or agriculturally acceptable salts thereof.

Further, we consider this object to be achievable, by herbicidally active compositions comprising imazethapyr or agriculturally acceptable salts thereof, cycloxydim or agriculturally acceptable salts thereof and bentazone or agriculturally acceptable salts thereof and optionally imazamox or agriculturally acceptable salts thereof.

The invention relates in particular to compositions in the form of agriculturally acceptable compositions as defined above.

The invention furthermore relates to the use of compositions as defined herein for controlling undesirable vegetation in crops. When using the compositions of the invention for this purpose the imazethapyr agriculturally acceptable salts thereof and cycloxydim agriculturally acceptable salts thereof and optionally imazamox or agriculturally acceptable salts thereof can be applied simultaneously or in succession in crops, where undesirable vegetation may occur.

When using the compositions of the invention for this purpose the imazamox or agriculturally acceptable salts thereof and cycloxydim or agriculturally acceptable salts thereof can be applied simultaneously or in succession in crops, where undesirable vegetation may occur.

The invention furthermore relates to the use of compositions as defined herein for controlling undesirable vegetation in crops which, by genetic engineering or by breeding, are tolerant to one or more herbicides, e.g. acetohydroxyacid synthase inhibiting herbicides such as imazethapyr or imazamox, and/or pathogens such as plant-pathogenous fungi, and/or to attack by insects; preferably tolerant to one or more herbicides that act as acetohydroxyacid synthase inhibitors.

The invention furthermore relates to a method for controlling undesirable vegetation, which comprises applying an herbicidal composition according to the present invention to the undesirable plants. Application can be done before, during and/or after, preferably during and/or after, the emergence of the undesirable plants.

The combination of imazethapyr or agriculturally acceptable salts thereof and cycloxydim or agriculturally acceptable salts thereof and optionally imazamox or agriculturally acceptable salts thereof can be applied simultaneously or in succession. The combination of imazethapyr or agriculturally acceptable salts thereof, cycloxydim or agriculturally acceptable salts thereof and bentazone or agriculturally acceptable salts thereof and optionally imazamox or agriculturally acceptable salts thereof can be applied simultaneously or in succession.

The invention in particular relates to a method for controlling undesirable vegetation in crops, which comprises applying an herbicidal composition according to the present invention in crops where undesirable vegetation occurs or might occur.

The invention furthermore relates to a method for controlling undesirable vegetation, which comprises allowing a composition according to the present invention to act on plants, their habitat or on seed.

In the methods of the present invention it is immaterial whether the combination of imazethapyr or agriculturally acceptable salts thereof and cycloxydim or agriculturally acceptable salts thereof and optionally imazamox or agriculturally acceptable salts thereof or the combination imazethapyr or agriculturally acceptable salts thereof, cycloxydim or agriculturally acceptable salts thereof and bentazone or agriculturally acceptable salts thereof and optionally imazamox or agriculturally acceptable salts thereof are formulated and applied jointly or separately, and, in the case of separate application, in which order the application takes place. It is only necessary, that the combination of imazethapyr or agriculturally acceptable salts thereof and cycloxydim or agriculturally acceptable salts thereof and optionally imazamox

or agriculturally acceptable salts thereof or the combination of imazethapyr or agriculturally acceptable salts thereof, cycloxydim or agriculturally acceptable salts thereof, bentazone or agriculturally acceptable salts thereof and optionally imazamox or agriculturally acceptable salts thereof are applied in a time frame, which allows simultaneous action of the active ingredients on the plants.

The invention also relates to an herbicide formulation, which comprises an agriculturally acceptable composition as defined herein and at least one carrier material, including liquid and/or solid carrier materials.

It is believed that the compositions according to the invention have better herbicidal activity against harmful plants than would have been expected by the herbicidal activity of the individual compounds. In other words, the joint action of the imazethapyr and cycloxydim combination, the imazethapyr, cycloxydim and imazamox combination, the imazethapyr, cycloxydim and bentazone combination and the imazethapyr, cycloxydim, bentazone and imazamox combination result in an enhanced activity against harmful plants in the sense of a synergy effect (synergism). For this reason, the compositions can, based on the individual components, be used at lower application rates to achieve a herbicidal effect comparable to the individual components. The compositions of the invention also show an accelerated action on harmful plants, i.e. damaging of the harmful plants is achieved more quickly in comparison with application of the individual herbicides. Moreover, the compositions of the present invention provide good pre-emergence herbicidal activity, i.e. the compositions are particularly useful for combating/controlling harmful plants before their emergence. Apart from that, the compositions of the present invention show good crop compatibility, i.e. their use in crops leads to a reduced damage of the crop plants.

As used herein, the terms "controlling" and "combating" are synonyms.

As used herein, the terms "undesirable vegetation" and "harmful plants" are synonyms.

Where reference is made to imazethapyr, this includes the free acid as well as agriculturally acceptable salts thereof.

Examples of agriculturally acceptable salts of imazethapyr include alkaline or earth alkaline metals or ammonium or organoammonium salts, for instance, sodium, potassium, ammonium and isopropyl ammonium. Particularly preferred is imazethapyr ammonium salt. Reference to a salt includes the anhydrous form as well as hydrated forms thereof.

Where reference is made to cycloxydim, this includes the free acid as well as agriculturally acceptable salts thereof.

Examples of agriculturally acceptable salts of cycloxydim include alkaline or earth alkaline metals or ammonium or organoammonium salts, for instance, lithium, sodium, potassium, ammonium and isopropyl ammonium. Particularly preferred are the lithium and the sodium salt of cycloxydim. Reference to a salt includes the anhydrous form as well as hydrated forms thereof.

Where reference is made to imazamox, this includes the free acid as well as agriculturally acceptable salts thereof.

Examples of agriculturally acceptable salts of imazamox include alkaline or earth alkaline metals or ammonium or organoammonium salts, for instance, sodium, potassium, ammonium and isopropyl ammonium. Particularly preferred is imazamox ammonium salt. Reference to a salt includes the anhydrous form as well as hydrated forms thereof.

Where reference is made to bentazone, this includes the free base as well as agriculturally acceptable salts thereof.

Examples of agriculturally acceptable salts of bentazone include alkaline or earth alkaline metals or ammonium or organoammonium salts, for instance, lithium, sodium, potassium, magnesium, calcium, ammonium, methylammonium, dimethylammonium, methyltrioctylammonium and isopropyl ammonium as well as the diethanolamine and choline salts. Particularly preferred is bentazone sodium salt. Reference to a salt includes the anhydrous form as well as hydrated forms thereof.

The compositions of the invention comprise the herbicidally active agents imazethapyr and cycloxydim and optionally imazamox.

Imazethapyr may be present in the form of its racemate or in the form of the pure R-or S-enantiomers (including salts as defined above). In particular suitable is R-imazethapyr. Cycloxydim may be present in the form of its racemate or in the form of the pure R- or S-enantiomers, or it may be present in the form of pure stereoisomers with respect to the two chiral centers and the ethoxyimino group, or as mixtures of two or more such stereoisomers (in each case, including salts as defined above). Particularly preferred is a racemic mixture of stereoisomers. Imazamox may be present in the form of its racemate or in the form of the pure R-or S-enantiomers (including salts as defined above). In particular suitable is R-imazamox.

The compositions of the invention may also comprise one or more safeners. Safeners, also termed as herbicide safeners, are organic compounds which in some cases lead to better crop plant compatibility when applied jointly with specifically acting herbicides. Some safeners are themselves herbicidally active. In these cases, the safeners act as antidote or antagonist in the crop plants and thus reduce or even prevent damage to the crop plants. However, in the compositions of the present invention, safeners are generally not required. Therefore, a preferred embodiment of the invention relates to compositions which contain no safener or virtually no safener (i.e. less than 1 % by weight, based

on the total amount of imazethapyr and cycloxydim and optionally imazamox).

Suitable safeners, which can be used in the compositions according to the present invention are known in the art, e.g. from The Compendium of Pesticide Common Names (http://www.alanwood.net/pesticides/); Farm Chemicals Handbook 2000 Vol. 86, Meister Publishing Company, 2000; B. Hock, C. Fedtke, R. R. Schmidt, Herbizide, Georg Thieme Verlag, Stuttgart 1995; W. H. Ahrens, Herbicide Handbook, 7th Edition, Weed Science Society of America, 1994; and K. K. Hatzios, Herbicide Handbook, Supplement to 7th Edition, Weed Science Society of America, 1998.

Safeners include benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloracetyl)-1,3-oxazolidine, 4-(dichloroacetyl)-1-oxa-4-azaspiro[4.5]decane and oxabetrinil, as well as thereof agriculturally acceptable salts. 2,2,5-Trimethyl-3-(dichloroacetyl)-1,3-oxazolidine [CAS No. 52836-31-4] is also known under the name R-29148.4-(Dichloroacetyl)-1-oxa-4-azaspiro[4.5]decane [CAS No. 71526-07-03] is also known under the names AD-67 and MON 4660.

As safener, the compositions according to the invention particularly preferably com-prise at least one of the compounds selected from the group of benoxacor, cloquintocet, cyprosulfamide, dichlormid, fenchlorazole, fenclorim, fluxofenim, furilazole, isoxadifen, mefenpyr, naphthalic anhydride, 2,2,5-trimethyl-3-(dichloroacetyl)-1,3-oxazolidine, and 4-(dichloroacetyl)-1-oxa-4-azaspiro[4.5]decane and oxabetrinil; and the agriculturally acceptable salt thereof.

A preferred embodiment of the invention relates to compositions which contain no safener or virtually no safener (i.e. less than 1 % by weight, based on the total amount of imazethapyr and cycloxydim and optionally imazamox) is applied.

If the compounds of herbicidally active compounds mentioned as safeners (see above) have functional groups, which can be ionized, they can also be used in the form of their agriculturally acceptable salts. In general, the salts of those cations are suitable whose cations have no adverse effect on the action of the active compounds ("agricultural acceptable").

In general, the salts of those cations are suitable whose cations have no adverse effect on the action of the active compounds ("agriculturally acceptable"). Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium (hereinafter also termed as organoammonium) in which one to four hydrogen atoms are replaced by C1-C4-alkyl, hydroxy-C1-C4-alkyl, C1-C4-alkoxy-C1-C4-alkyl, hydroxy-C1-C4-alkoxy-C1-C4-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)eth-1-ylammonium, di(2-hydroxyeth-1-yl)ammonium, benzyltrimethylammonium, benzyltriethylammonium, furthermore phosphonium ions, sulfonium ions, preferably tri($C_1$-$C_4$-alkyl)sulfonium such as trimethylsulfonium, and sulfoxonium ions, preferably tri($C_1$-$C_4$-alkyl)sulfoxonium.

The compositions of the present invention are suitable for controlling a large number of harmful plants, including monocotyledonous weeds, in particular annual weeds such as gramineous weeds (grasses) including *Echinochloa* species such as barnyardgrass (*Echinochloa crusgalli var. crus-galli*) or *Echinochloa colonum*, Digitaria species such as crabgrass (*Digitaria sanguinalis*), *certain undesired Oryza spec. such* as *weedy rice or red rice (Oryza sativa)*, Setaria species such as green foxtail (*Setaria viridis*) and giant foxtail (*Setaria faberii*), Sorghum species such as johnsongrass (*Sorghum halepense Pers*.), Avena species such as wild oats (*Avena fatua*), *Cenchrus* species such as *Cenchrus echinatus*, *Bromus* species, *Lolium* species, *Leptochloa* spec. such as *Leptochloa fusca*, *Phalaris* species such as *Phalaris canariensis, Eriochloa* species, *Panicum* species, *Brachiaria* species such as *Brachiaria deflexa* or *Brachiaria plantaginea*, annual bluegrass (*Poa annua*), blackgrass (*Alopecurus myosuroides*), *Aegilops cylindrica, Agropyron repens, Apera spica-venti, Eleusine indica, Cynodon dactylon,*

*Rottboellia cochinchinensis*, *Dinebra* species such as *Dinebra arabica* and *Saccharum spontaneum*.

The invention is particular suitable for controlling monocotyledonous weeds selected from the group consisting of *Echinochloa* spec. such as *Echinochloa colonum*, *Leptochloa* spec. such as *Leptochloa fusca*, *certain undesired Oryza spec. such* as *weedy rice or red rice* (*Oryza sativa*), *Phalaris* spec. such as *Phalaris canariensis*, *Brachiaria* spec. such as *Briachiaria deflexa* or *Brachiaria plataginea.*

The compositions of the present invention are also suitable for controlling a large number of dicotyledonous weeds, in particular broad leaf weeds including *Acalypha* species such as *Acalypha indica*, *Polygonum* species such as wild buckwheat (*Polygonum convolvolus*), *Amaranthus* species such as pigweed (*Amaranthus retroflexus*) or *Amaranthus viridis*, *Chenopodium* species such as common lambsquarters (*Chenopodium album* L.), Sida species such as prickly sida (*Sida spinosa* L.), *Ambrosia* species such as common ragweed (*Ambrosia artemisiifolia*), *Acanthospermum* species, *Anthemis* species, *Atriplex* species, *Cirsium* species, *Convolvulus* species, *Conyza* species, Cassia species, *Commelina* species such as for example *Commelina communis* or *Commelina benghalensis*, *Datura* species, *Euphorbia* species such as for example *Euphorbia hirta* or *Euphorbia geniculata*, *Geranium* species, *Galinsoga* species, morningglory (*Ipomoea* species), *Lamium* species, *Malva* species, *Matricaria* species, *Sysimbrium* species, *Solanum* species,

*Xanthium* species such as for example *Xanthium strumiarium*, *Veronica* species, *Viola* species, common chickweed (*Stellaria media*), velvetleaf (*Abutilon theophrasti*), Hemp sesbania (*Sesbania exaltata* Cory), *Anoda cristata*, *Bidens pilosa*, Brassica kaber, *Capsella bursa-pastoris*, *Centaurea cyanus*, *Galeopsis tetrahit*, *Galium aparine*, *Helianthus annuus, Desmodium tortuosum, Kochia scoparia, Mercurialis annua, Myosotis arvensis, Papaver rhoeas, Raphanus raphanistrum, Salsola kali, Sinapis arvensis, Sonchus arvensis, Thlaspi arvense, Tagetes minuta, Richardia brasiliensis, Rumex crispus, Rumex obtusifolius, Heracleaum sphondylium, Aethusa cynapium, Daucus carota, Equisetum arvense, Celosia argentea*, *Cynotis* species such as *Cynotis axilaris*, *Parthenium* species such as *Parthenium hysterophorus*, *Physalis* species such as *Physalis minima*, *Digera* species such as *Digera arvensis.*

The herbicidal composition comprising imazethapyr and cycloxydim is particular suitable for controlling monocotyledonous weeds, preferably *Echinochloa* spec., *Leptochloa* spec., *Orysa* spec., *Phalaris* spec., *Brachiaria* spec., more preferably *Echinochloa* spec. such as *Echinochloa colonum*, *Leptochloa* spec. such as *Leptochloa* fusca and *Orysa* spec. such as *Orysa sativa*.

The herbicidal comprising imazethapyr, imazamox and cycloxydim is particular suitable for *Echinochloa* spec., *Leptochloa* spec., *Orysa* spec., *Phalaris* spec., *Brachiaria* spec., more preferably *Phalaris* spec. such as *Phalaris canariensis*, *Echinochloa* spec. such as *Echinochloa colonum*, *Phalaris* spec. such as *Phalaris canariensis*, *Orysa* spec. such as *Orysa sativa* and *Brachiaria* spec. such as *Brachiaria plantaginea*.

The combination of imazethapyr and cycloxydim is in particular useful against annual and perennial grasses and broad-leaved weeds in post-emergence application.

The compositions of the present invention are also suitable for controlling a large number of annual and perennial sedge weeds including cyperus species such as purple nutsedge (*Cyperus rotundus* L.), yellow nutsedge (*Cyperus esculentus* L.), hime-kugu (*Cyperus brevifolius* H.), sedge weed (*Cyperus microiria* Steud) and rice flatsedge (*Cyperus iria* L.).

The compositions according to the present invention are suitable for combat-ing/controlling common harmful plants in useful plants (i.e. in crops). The compositions of the present invention are generally suitable for combating/controlling undesired vegetation in

- Legumes (*Fabaceae*), including e.g. soybeans (*Glycine max*.), peanuts (*Arachis hypogaea*) and pulse crops such as peas including *Pisum sativum,* pigeon pea and cowpea, beans including broad beans (*Vicia faba*), *Vigna* spp., and *Phaseolus* spp. and lentils (*lens culinaris* var.).
- crops which are tolerant to the action of acetohydroxyacid synthase inhibiting herbicides, such as for example Clearfield@ wheat, Clearfield@ barley, Clearfield@ corn, Clearfield@ lentil, Clearfield@ oilseed rape or canola, Clearfield@ rice, Cultivance® soybean and/or Clearfield@ sunflower.

The compositions of the present invention are in particular suitable for combat-ing/controlling undesired vegetation in soybean, peanut, pea, bean, lentil, green gram, black gram, cluster bean, fenugreek, other pulse or leguminous crops, or crops which are tolerant to the action of acetohydroxyacid synthase inhibiting herbicides, such as for example Clearfield@ wheat, Clearfield@ barley, Clearfield@ corn, Clearfield@ lentil, Clearfield@ oilseed rape or canola, Clearfield@ rice, Cultivance® soybean and/or Clearfield@ sunflower.

The compositions of the present invention are most suitable for combating/controlling undesired vegetation in soybean, peanut, pea, bean, lentil, green gram, black gram, cluster bean, fenugreek, other pulse or leguminous crops, preferably soybean (*Glycine max*.).

If not stated otherwise, the compositions of the invention are suitable for application in any variety of the aforementioned crop plants.

The compositions according to the invention can also be used in crop plants which are tolerant to one or more herbicides owing to genetic engineering or breeding, which are resistant to one or more pathogens such as plant pathogenous fungi to genetic engineering or breeding, or which are resistant to attack by insects owing to genetic engineering or breeding. Suitable are for example pulse or leguminous crop plants, preferably soybean, peanut, pea, bean, green gram, black gram, cluster bean, fenugreek, or lentil which are tolerant to herbicidal AHAS inhibitors, such as, for example imazethapyr, or pulse or leguminous crop plants, preferably soybean, peanut, pea, bean, green gram, black gram, cluster bean, fenugreek, or lentil which, owing to introduction of the gene for Bt toxin by genetic modification, are resistant to attack by certain insects. Most suitable are soybeans which are tolerant to herbicidal AHAS inhibitors, such as, for example imazethapyr or soybean plants which, owing to introduction of the gene for Bt toxin by genetic modification, are resistant to attack by certain insects.

The compositions of the present invention can be applied in conventional manner by using techniques as skilled person is familiar with. Suitable techniques include spraying, atomizing, dusting, spreading or watering. The type of application depends on the intended purpose in a well known manner; in any case, they should ensure the finest possible distribution of the active ingredients according to the invention.

The compositions can be applied pre- or post-emergence, i.e. before, during and/or after emergence of the

undesirable plants. Preferably, the compositions are applied post-emergence, in particular after the emergence of both the crop and the undesirable plants. When the compositions are used in crops, they can be applied after seeding and before or after the emergence of the crop plants. The compositions invention can, however, also be applied prior to seeding of the crop plants.

In any case imazethapyr and cycloxydim and optionally imazamox can be applied simultaneously or in succession.

Also imazethapyr, cycloxydim, bentazone and optionally imazamox can be applied simultaneously or in succession.

The compositions are applied to the plants mainly by spraying, in particular foliar spraying. Application can be carried out by customary spraying techniques using, for example, water as carrier and spray liquor rates of from 10 to 2000 l/ha or 50 to 1000 l/ha (for example from 100 to 500 l/ha). Application of the herbicidal compositions by the low-volume and the ultra-low-volume method is possible, as is their application in the form of microgranules.

In the case of a post-emergence treatment of the plants, the herbicidal mixtures or compositions according to the invention are preferably applied by foliar application. Application may be effected, for example, by usual spraying techniques with water as the carrier, using amounts of spray mixture of 20 to 1000 l/ha.

The required application rate of the composition of the pure active compounds, i.e. of imazethapyr, cycloxydim and optionally imazamox and/or safener (imazethapyr, cycloxydim and bentazone and optionally imazamox and/or safener respectively) depends on the density of the undesired vegetation, on the development stage of the plants, on the climatic conditions of the location where the composition is used and on the application method. In general, the application rate of the composition (total amount of imazethapyr, cycloxydim and optional further actives) is from 1 to 2,000 g/ha, preferably from 5 to 500 g/ha of active substance.

The required application rates of imazethapyr are generally in the range from 1 g/ha to 200 g/ha and preferably in the range from 5 g/ha to 150 g/ha or from 10 g/ha to 100 g/ha of active substance.

The required application rates of cycloxydim are generally in the range from 1 g/ha to 200 g/ha and preferably in the range from 2 g/ha to 150 g/ha or from 5 g/ha to 100 g/ha of active substance.

The required application rates of imazamox are generally in the range from 1 g/ha to 100 g/ha and preferably in the range from 5 g/ha to 75 g/ha or from 10 g/ha to 50 g/ha of active substance.

The imazethapyr/cycloxydim combination is usually in a weight ratio range of 100:1 to 1:100, preferably of 10:1 to 1:10, or 1:3 to 3:1, more preferably 1:2 to 2:1.

In those combinations which contain imazamox in addition to imazethapyr and cycloxydim, the weight ratio of imazethapyr to imazamox is usually in the range of 10:1 to 1:10, preferably of 5:1 to 1:5, more preferably 2:1 to 1:2.

In those combinations which contain imazamox in addition to imazethapyr and cycloxydim, the weight ratio of the total amount of imazethapyr and imazamox to cycloxydim is 1:20 to 20:1 or 1:10 to 10:1, more preferably 1:2 to 2:1.

In those combinations which contain imazethapyr, cycloxydim and bentazone, the weight ration of imazethapyr to bentazone is from ranges from 1:500 to 10:1 or 1:100 to 1:1 or 1:20 to 1:3

In those combinations which contain imazethapyr, cycloxydim and bentazone, the weight ration of cycloxydim to bentazone is from ranges from 1:500 to 10:1 or 1:100 to 1:1 or 1:20 to 1:3.

In those combinations which contain imazethapyr, cycloxydim, bentazone and imazamox, the weight ratio of the total amount of imazethapyr and imazamox to bentazone is 10:1 to 1:500 or 1:1 to 1:100 or 1:3 to 1:20.

The required application rates of the safener, if applied, are generally in the range from 1 g/ha to 2,000 g/ha and preferably in the range from 2 g/ha to 2,000 g/ha or from 5 g/ha to 2,000 g/ha of active substance. Preferably no safener or virtually no safener is applied.

The compositions of these embodiments are particularly suitable for controlling mono- and dicotyledonous weeds and sedge weeds, in particular *Acalypha* spec., *Physalis spec.*, *Digera spec., Aegilops Cylindrica, Agropyron repens, Alopecurus myosuroides, Avena fatua, Brassica* spec., *Brachiaria* spec., *Bromus* spec., *Echinochloa* spec. such as for example *Echinochloa colonum*, *Lolium* spec., *Phalaris* spec., red rice, *Setaria* spec., *Leptochloa* spec. such as *Leptochloa fusca*, *Orysa* spec. such as *Orysa sativa*, *Sorghum* spec., *Abuthilon theoprasti*, *Amarantus* spec., *Brassica kaber*, *Capsella bursa-pastoris*, *Chenopodium* spec., *Cyperus* spec., *Euphorbia* spec. such as for example *Euphorbia hirta* or *Euphorbia geniculata*, *Geranium* sepc., *Ipomoea* spec., *Polygonum* spec., *Raphanus raphanistrum*, *Sinapis arevensis*, *Sysimbrium* spec., *Thlaspi arvense*, *Rottboellia cochinchinensis*, *Dinebra* spec., *Digitaria sanguinalis, Eleusine indica, Saccharum spontaneum, Cynodon dactylon, Commelina benghalensis, Commelina communis*, *Parthenium* spec., *Celosia argentea*, *Cynotis spp* and *Xanthium strumarium.*

The compositions of these embodiments are particularly suitable for controlling monocotyledonous weeds, preferably *Echinochloa* spec., *Leptochloa* spec., *Orysa* spec., *Phalaris* spec., *Brachiaria* spec..

The compositions of these embodiments are in particular suitable for combating undesired vegetation in soybean, peanut, pea, bean, lentil, green gram, black gram, cluster bean, fenugreek, other pulse or leguminous crops, or crops which are tolerant to the action of acetohydroxyacid synthase inhibiting herbicides, such as for example Clearfield@ wheat, Clearfield@ barley, Clearfield@ corn, Clearfield@ lentil, Clearfield@ oilseed rape or canola, Clearfield@ rice,

Cultivance® soybean and/or Clearfield@ sunflower. The compositions of these embodiments are most suitable for combating undesired vegetation in soybean, peanut, pea, bean, lentil, green gram, black gram, cluster bean, fenugreek, other pulse or leguminous crops, preferably soybean.

If not stated otherwise, the compositions of this embodiment are suitable for application in any variety of the aforementioned crop plants.

In particular, the compositions of these embodiments are suitable for application in soybean, peanut, pea, bean, lentil, green gram, black gram, cluster bean, fenugreek, other pulse or leguminous crops, preferably soybean.

The present invention also relates to formulations of the compositions according to the present invention. The formulations contain, besides the composition, at least one organic or inorganic carrier material. The formulations may also contain, if desired, one or more surfactants and, if desired, one or more further auxiliaries customary for crop protection compositions.

The formulation may be in the form of a single package formulation containing both imazethapyr and cycloxydim and optionally imazamox together with liquid and/or solid carrier materials, and, if desired, one or more surfactants and, if desired, one or more further auxiliaries customary for crop protection compositions. The formulation may be in the form of a two package formulation, wherein one package contains a formulation of imazethapyr and optionally imazamox while the other package contains a formulation of cycloxydim and wherein both formulations contain at least one carrier material, if desired, one or more surfactants and, if desired, one or more further auxiliaries customary for crop protection compositions. In the case of two package formulations the formulation containing imazethapyr and optionally imazamox and the formulation containing cycloxydim are mixed prior to application. In case the imazethapyr and optionally imazamox itself is a two package formulation the composition is in the form of a three-pack formulation. Preferably the mixing is performed as a tank mix, i.e. the formulations are mixed immediately prior or upon dilution with water.

The formulation may be in the form of a single package formulation containing imazethapyr, cycloxydim and bentazone and optionally imazamox together with liquid and/or solid carrier materials, and, if desired, one or more surfactants and, if desired, one or more further auxiliaries customary for crop protection compositions.

The formulation may be in form of a two package formulation or three package formulation, wherein one package may contain more than one herbicide and wherein each package may contain at least one carrier material, if desired, one or more surfactants and, if desired, one or more further auxiliaries customary for crop protection compositions. The formulation may be in form or a three package formulation or four package formulation, wherein each package may contain one herbicide and wherein each package may contain at least one carrier material, if desired, one or more surfactants and, if desired, one or more further auxiliaries customary for crop protection compositions. The different packages are mixed prior to application. Preferably the mixing is performed as a tank mix, i.e. the formulations are mixed immediately prior or upon dilution with water.

In the formulation of the present invention the active ingredients, i.e. imazethapyr, cycloxydim, optionally imazamox and optional further actives are present in suspended, emulsified or dissolved form. The formulation according to the invention can be in the form of aqueous solutions, powders, suspensions, also highly-concentrated aqueous, oily or other suspensions or dispersions, aqueous emulsions, aqueous microemulsions, aqueous suspoemulsions, oil dispersions, pastes, dusts, materials for spreading or granules.

Depending on the formulation type, they comprise one or more liquid or solid carriers, if appropriate surfactants (such as dispersants, protective colloids, emulsifiers, wetting agents and tackifiers), and if appropriate further auxiliaries which are customary for formulating crop protection products. The person skilled in the art is sufficiently familiar with the recipes for such formulations. Further auxiliaries include e.g. organic and inorganic thickeners, bactericides, antifreeze agents, antifoams, colorants and, for seed formulations, adhesives.

Suitable carriers include liquid and solid carriers. Liquid carriers include e.g. non-aqueous solvents such as cyclic and aromatic hydrocarbons, e.g. paraffins, tetrahydronaphthalene, alkylated naphthalenes, alkylated benzenes, alcohols such as methanol, ethanol, propanol, butanol and cyclohexanol, ketones such as cyclohexanone, strongly polar solvents, e.g. amines such as N-methylpyrrolidone, and water as well as mixtures thereof. Solid carriers include e.g. mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. BorrespersTM-types, Borregaard), phenolsulfonic acids, naphthalenesulfonic acids (Morwet types, Akzo Nobel) and dibutylnaphthalenesulfonic acid (Nekal® types, BASF SE), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene, condensates of naphthalene or of the naphthalenesulfonic acids with phenol and formaldehyde, polyoxyethylene octylphenol ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide

condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denaturated proteins, polysaccharides (e.g. methylcellulose), hydrophobically modified starches, polyvinyl alcohol (Mowiol® types Clariant), polycarboxylates (BASF SE, Sokalan® types), polyalkoxylates, polyvinylamine (BASF SE, Lupamine® types), polyethyleneimine (BASF SE, Lupasol® types), polyvinylpyrrolidone and copolymers thereof.

Examples of thickeners (i.e. compounds which impart to the formulation modified flow properties, i.e. high viscosity in the state of rest and low viscosity in motion) are polysaccharides, such as xanthan gum (Kelzan® from Kelco), Rhodopol® 23 (Rhone Poulenc) or Veegum® (from R.T. Vanderbilt), and also organic and inorganic sheet minerals, such as Attaclay® (from Engelhardt).

Examples of antifoams are silicone emulsions (such as, for example, Silikon®· SRE, Wacker or Rhodorsil® from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel® from ICI or Acticide® RS from Thor Chemie and Kathon® MK from Rohm & Haas), and also isothiazolinone derivates, such as alkylisothiazolinones and benzisothiazolinones (Acticide® MBS from Thor Chemie).

Examples of antifreeze agents are ethylene glycol, propylene glycol, urea or glycerol.

Examples of colorants are both sparingly water-soluble pigments and water-soluble dyes. Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

To prepare emulsions, pastes or oil dispersions, the active the components, as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Powders, materials for spreading and dusts can be prepared by mixing or concomitant grinding of the active the components imazethapyr and cycloxydim and optionally imazamox and optionally safener with a solid carrier.

Granules, e.g. coated granules, impregnated granules and homogeneous granules, can be prepared by binding the active ingredients to solid carriers.

The formulations of the invention comprise a herbicidally effective amount of the composition of the present invention. The concentrations of the active ingredients in the formulations can be varied within wide ranges. In general, the formulations comprise from 1 to 98% by weight, preferably 10 to 60 % by weight, of active ingredients (sum of imazethapyr and cycloxydim and optionally imazamox and/or further acitves; sum of imazethapyr, cycloxydim and bentazone and optionally imazamox and/or further actives). The active ingredients are employed in a purity of from 90% to 100%, preferably 95% to 100% (according to NMR spectrum).

The active compounds imazethapyr and cycloxydim and optionally imazamox as well as the compositions according to the invention can, for example, be formulated as follows:

1. Products for dilution with water

A Water-soluble concentrates

10 parts by weight of active compound (or composition) are dissolved in 90 parts by weight of water or a water-soluble solvent. As an alternative, wetters or other adjuvants are added. The active compound dissolves upon dilution with water. This gives a formulation with an active compound content of 10% by weight.

B Dispersible concentrates

20 parts by weight of active compound (or composition) are dissolved in 70 parts by weight of cyclohexanone with addition of 10 parts by weight of a dispersant, for example polyvinylpyrrolidone. Dilution with water gives a dispersion. The active compound content is 20% by weight.

C Emulsifiable concentrates

15 parts by weight of active compound (or composition) are dissolved in 75 parts by weight of an organic solvent

(eg. alkylaromatics) with addition of calcium dodecyl-benzenesulfonate and castor oil ethoxylate (in each case 5 parts by weight). Dilution with water gives an emulsion. The formulation has an active compound content of 15% by weight.

D Emulsions

25 parts by weight of active compound (or composition) are dissolved in 35 parts by weight of an organic solvent (eg. alkylaromatics) with addition of calcium dodecyl-benzenesulfonate and castor oil ethoxylate (in each case 5 parts by weight). This mixture is introduced into 30 parts by weight of water by means of an emulsifier (Ultraturrax) and made into a homogeneous emulsion. Dilution with water gives an emulsion. The formulation has an active compound content of 25% by weight.

E Suspensions

In an agitated ball mill, 20 parts by weight of active compound (or composition) are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

F Water-dispersible granules and water-soluble granules

50 parts by weight of active compound (or composition) are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

G Water-dispersible powders and water-soluble powders

75 parts by weight of active compound (or composition) are ground in a rotor-stator mill with addition of 25 parts by weight of dispersants, wetters and silica gel. Dilution with water gives a stable dispersion or solution of the active compound. The active compound content of the formulation is 75% by weight.

H Gel formulations

In a ball mill, 20 parts by weight of active compound (or composition), 10 parts by weight of dispersant, 1 part by weight of gelling agent and 70 parts by weight of water or of an organic solvent are mixed to give a fine suspension. Dilution with water gives a stable suspension with active compound content of 20% by weight.

2. Products to be applied undiluted

I Dusts

5 parts by weight of active compound (or composition) are ground finely and mixed intimately with 95 parts by weight of finely divided kaolin. This gives a dusting powder with an active compound content of 5% by weight.

J Granules (GR, FG, GG, MG)

0.5 parts by weight of active compound (or composition) are ground finely and associated with 99.5 parts by weight of carriers. Current methods here are extrusion, spray-drying or the fluidized bed. This gives granules to be applied undiluted with an active compound content of 0.5% by weight.

K ULV solutions (UL)

10 parts by weight of active compound (or composition) are dissolved in 90 parts by weight of an organic solvent, for example xylene. This gives a product to be applied undiluted with an active compound content of 10% by weight.

Aqueous use forms can be prepared from emulsion concentrates, suspensions, pastes, wettable powders or water-dispersible granules by adding water.

It may furthermore be beneficial to apply the compositions of the invention alone or in combination with other

herbicides, or else in the form of a mixture with other crop protection agents, for example together with agents for controlling pests or phytopathogenic fungi or bacteria. Also of interest is the miscibility with mineral salt solutions, which are employed for treating nutritional and trace element deficiencies. Other additives such as non-phytotoxic oils and oil concentrates may also be added.

Synergism can be described as an interaction where the combined effect of two or more compounds is greater than the sum of the individual effects of each of the compounds. The presence of a synergistic effect in terms of percent control, between two mixing partners (X and Y) can be calculated using the Colby equation (Colby, S. R., 1967, Calculating Synergistic and Antagonistic Responses in Herbicide Combinations, Weeds, 15, 21-22):

$$E = X + Y - \frac{XY}{100}$$

When the observed combined control effect is greater than the expected (calculated) combined control effect (E), then the combined effect is synergistic.

The following tests demonstrate the control efficacy of compounds, mixtures or compositions of this invention on specific weeds. However, the weed control afforded by the compounds, mixtures or compositions is not limited to these species.The analysis of synergism or antagonism between the mixtures or compositions was determined using Colby's equation.

Analogously, the Colby's equation can be used to determine synergism of 3-way and higher mixtures.

**EXAMPLES**

**Products:**

Imazethapyr - 70 % WG

Imazamox - 70 % WG

(Imazethapyr 35 + Imazamox 35) - 70% WG - Ready mix

Cycloxydim - 200 g/lit EC

Weeds in the study

| **EPPO** | **Scientific Name** |
|---|---|
| **Code** | |
| ECHCO | Echinochloa colonum |
| LEFFA | Leptochloa fusca |
| ORYSA | Orysa sativa |
| PHACA | Phalaris canariensis |
| BRADE | Brachiaria deflexa |
| BRAPL | Brachiaria plantaginea |

**Example 1: Post emergence treatment by the mixture of Imazethapyr + Cycloxydim**

| Application rate in g ai/ha | | Herbicidal activity against | | | | | |
|---|---|---|---|---|---|---|---|
| | | ECHCO | | LEFFA | | ORYSA | |
| Imazethapyr | Cycloxydim | Found | Calcu lated | Found | Calcu lated | Found | Calcu lated |
| 7,5 | -- | 85 | -- | 55 | -- | 50 | -- |
| -- | 6 | 50 | -- | 40 | -- | 20 | -- |
| 7,5 | 6 | 95 | 93 | 85 | 73 | 80 | 60 |

**Example 2: Post emergence treatment by the mixture of (Imazethapyr + Imazamox) + Cycloxydim**

| Application rate in g ai/ha | | Herbicidal activity against | | | |
|---|---|---|---|---|---|
| | | PHACA | | ECHCO | |
| (Imazethapyr + Imazamox) | Cycloxydim | Found | Calcu lated | Found | Calcu lated |
| 30 | -- | 50 | -- | 98 | -- |
| -- | 3 | 0 | -- | 0 | -- |
| 30 | 3 | 85 | 50 | 100 | 98 |

| Application rate in g ai/ha | | Herbicidal activity against | | | |
|---|---|---|---|---|---|
| | | PHACA | | ORYSA | |
| (Imazethapyr + Imazamox) | Cycloxydim | Found | Calcu lated | Found | Calcu lated |
| 15 | -- | 85 | -- | 90 | -- |
| -- | 6 | 60 | -- | 20 | -- |
| 15 | 6 | 95 | 94 | 95 | 92 |

| Application rate in g ai/ha | | Herbicidal activity against | | | |
|---|---|---|---|---|---|
| | | PHACA | | BRAPL | |
| (Imazethapyr + Imazamox) | Cycloxydim | Found | Calculated | Found | Calcu lated |
| 15 | -- | 50 | -- | 80 | -- |
| -- | 3 | 0 | -- | 0 | -- |
| 15 | 3 | 75 | 50 | 85 | 80 |

## Claims

1. Herbicidal compositions comprising imazethapyr, or an agriculturally acceptable salt thereof and cycloxydim, or an agriculturally acceptable salt thereof and optionally imazamox, or an agriculturally acceptable salt thereof.

2. Composition according to claim 1, wherein the composition additionally comprises bentazone.

3. Compositions as claimed in any of the preceding claims, wherein the relative amount of imazethapyr to cycloxydim is from 100:1 to 1:100.

4. The use of the compositions as claimed in any of the preceding claims for controlling undesirable vegetation.

5. The use of the composition as claimed in claim 4 wherein the undesirable vegetation is monocotyledonous weeds.

6. The use of the composition as claimed in claim 5 wherein the monocotyledonous weeds are selected from the group consisting of Dinebra spec., Echinochloa spec., Leptochloa spec., Phalaris spec., Brachiaria spec.

7. The use of the composition as claimed in claim 5 wherein the monocotyledonous weeds are selected from the group consisting of Dinebra arabica, Echinochloa colonum, Leptochloa fusca, Phalaris canariensis, Brachiaria deflexa, Brachiaria plantaginea.

8. The use as claimed in claims 4 to 7 for controlling undesirable vegetation in crop plants.

9. The use as claimed in claim 8, wherein the crop plants are leguminous crops selected from soybean, green gram, black gram, peas, cluster beans, pulse crops, peanut.

10. The use as claimed in claims 8 to 9, wherein the crop plants are tolerant to acetohydroxyacid synthase inhibiting herbicides.

11. A method for controlling undesirable vegetation, which comprises allowing a composition as claimed in claims 1 to 3 to act on plants to be controlled or their habitat.

12. A method for controlling undesired vegetation as claimed in claim 11, which comprises applying the composition as claimed in claims 1 to 3 before, during and/or after the emergence of the undesirable plants; the herbicides imazethapyr and cycloxydim and optionally imazamox being applied simultaneously or in succession.

13. A method for controlling undesired vegetation as claimed in claim 11, which comprises applying the composition as claimed in claims 2 to 3 before, during and/or after the emergence of the undesirable plants; the herbicides imazethapyr, cycloxydim and bentazone and optionally imazamox being applied simultaneously or in succession.

14. An herbicide formulation comprising a composition as claimed in any of claims 1 to 3 and at least one solid or liquid carrier.

**Patentansprüche**

1. Herbizidzusammensetzungen, umfassend Imazethapyr oder ein landwirtschaftlich annehmbares Salz davon und Cycloxydim oder ein landwirtschaftlich annehmbares Salz davon und gegebenenfalls Imazamox oder ein landwirtschaftlich annehmbares Salz davon.

2. Zusammensetzung nach Anspruch 1, wobei die Zusammensetzung zusätzlich Bentazon umfasst.

3. Zusammensetzungen, wie in beliebigen der vorhergehenden Ansprüche beansprucht, wobei der relative Gehalt an Imazethapyr zu Cycloxydim 100:1 bis 1:100 beträgt.

4. Verwendung der Zusammensetzungen, wie in beliebigen der vorhergehenden Ansprüche beansprucht, zur Bekämpfung von unerwünschter Vegetation.

5. Verwendung der Zusammensetzung, wie in Anspruch 4 beansprucht, wobei es sich bei der unerwünschten Vegetation um monokotyle Unkräuter handelt.

6. Verwendung der Zusammensetzung, wie in Anspruch 5 beansprucht, wobei die monokotylen Unkräuter aus der Gruppe bestehend aus Dinebra spec, Echinochloa spec, Leptochloa spec, Phalaris spec, Brachiaria spec. ausgewählt sind.

7. Verwendung der Zusammensetzung, wie in Anspruch 5 beansprucht, wobei die monokotylen Unkräuter aus der Gruppe bestehend aus Dinebra arabica, Echinochloa colonum, Leptochloa fusca, Phalaris canariensis, Brachiaria deflexa und Brachiaria plantaginea ausgewählt sind.

8. Verwendung, wie in den Ansprüchen 4 bis 7 beansprucht, zur Bekämpfung von unerwünschter Vegetation bei

Nutzpflanzen.

9. Verwendung, wie in Anspruch 8 beansprucht, wobei die Nutzpflanzen Hülsenfrüchte sind, ausgewählt aus Sojabohne, Mungbohne, Urdbohne, Erbsen, Guarbohnen, Körnerleguminosen, Erdnuss.

10. Verwendung, wie in den Ansprüchen 8 bis 9 beansprucht, wobei die Nutzpflanzen gegenüber Acetohydroxysäure-Synthase inhibierenden Herbiziden tolerant sind.

11. Verfahren zur Bekämpfung unerwünschter Vegetation, welches es umfasst, dass man eine Zusammensetzung, wie in den Ansprüchen 1 bis 3 beansprucht, auf zu bekämpfende Pflanzen oder deren Lebensraum einwirken lässt.

12. Verfahren zur Bekämpfung unerwünschter Vegetation, wie in Anspruch 11 beansprucht, welches das Anwenden der Zusammensetzung, wie in den Ansprüchen 1 bis 3 vorhergehend beansprucht, während und/oder nach der Emergenz der unerwünschten Pflanzen umfasst; wobei die Herbizide Imazethapyr und Cycloxydim und gegebenenfalls Imazamox gleichzeitig oder nacheinander angewendet werden.

13. Verfahren zum Bekämpfen unerwünschter Vegetation, wie in Anspruch 11 beansprucht, welches das Anwenden der Zusammensetzung, wie in den Ansprüchen 2 bis 3 vorhergehend beansprucht, während und/oder nach der Emergenz der unerwünschten Pflanzen umfasst; wobei die Herbizide Imazethapyr, Cycloxydim und Bentazon und gegebenenfalls Imazamox gleichzeitig oder nacheinander angewendet werden.

14. Herbizidformulierung, umfassend eine Zusammensetzung, wie in beliebigen der Ansprüche 1 bis 3 beansprucht, und mindestens einen festen oder flüssigen Träger.

**Revendications**

1. Compositions herbicides comprenant de l'imazéthapyr, ou un sel acceptable sur le plan agricole de celui-ci, et du cycloxydime, ou un sel acceptable sur le plan agricole de celui-ci, et éventuellement de l'imazamox, ou un sel acceptable sur le plan agricole de celui-ci.

2. Composition selon la revendication 1, où la composition comprend en outre de la bentazone.

3. Compositions selon l'une quelconque des revendications précédentes, où la quantité relative de l'imazéthapyr au cycloxydime va de 100:1 à 1:100.

4. Utilisation des compositions selon l'une quelconque des revendications précédentes, pour le contrôle de végétation indésirable.

5. Utilisation de la composition selon la revendication 4, où la végétation indésirable est constituée d'adventices monocotylédones.

6. Utilisation de la composition selon la revendication 5, où les adventices monocotylédones sont choisies dans le groupe constitué par *Dinebra* sp., *Echinochloa* sp., *Leptochloa* sp., *Phalaris* sp., *Brachiaria* sp.

7. Utilisation de la composition selon la revendication 5, où les adventices monocotylédones sont choisies dans le groupe constitué par *Dinebra arabica*, *Echinochloa colonum, Leptochloa fusca, Phalaris canariensis, Brachiaria deflexa, Brachiaria plantaginea*.

8. Utilisation selon les revendications 4 à 7, pour le contrôle de végétation indésirable dans des plantes de culture.

9. Utilisation selon la revendication 8, où les plantes de culture sont des cultures de légumineuses choisies parmi le soja, *Vigna radiata*, *Vigna mungo*, les pois, le cyamopsis fausse-psoralée, les cultures de légumes-grains, l'arachide.

10. Utilisation selon les revendications 8 à 9, où les plantes de culture sont tolérantes vis-à-vis des herbicides inhibiteurs de l'acétohydroxyacide synthase.

11. Méthode de contrôle de végétation indésirable, comprenant le fait de permettre à une composition selon les revendications 1 à 3 d'agir sur les plantes à contrôler ou sur leur habitat.

**12.** Méthode de contrôle de végétation indésirable selon la revendication 11, comprenant l'application de la composition selon les revendications 1 à 3 avant, pendant et/ou après la levée des plantes indésirables ; les herbicides imazéthapyr et cycloxydime et éventuellement imazamox étant appliqués de manière simultanée ou en succession.

**13.** Méthode de contrôle de végétation indésirable selon la revendication 11, comprenant l'application de la composition selon les revendications 2 à 3 avant, pendant et/ou après la levée des plantes indésirables ; les herbicides imazéthapyr, cycloxydime et bentazone et éventuellement imazamox étant appliqués de manière simultanée ou en succession.

**14.** Formulation herbicide, comprenant une composition selon l'une quelconque des revendications 1 à 3 et au moins un véhicule solide ou liquide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6534444 B1
- WO 2008071714 A1
- US 7150470 B1
- US 20110065579 A1


### Non-patent literature cited in the description


- **SHANER, D. L. ; O' CONNER, S.L.** The Imidazolinone Herbicides. CRC Press Inc, 1991
- **VYN et al.** *Can. J. Plant Sci.,* 2007, 175-182
- **DA SILVA et al.** *Revista Ceres,* 2005, vol. 52 (299), 23-32
- **HALVANKAR et al.** *J. Maharashtra agric. Univ.,* 2005, vol. 30 (1), 035-037
- **MEENA et al.** *Environment & Ecology,* 2012, vol. 30 (3), ISSN 0970-0420, 517-526
- **FEDORUK et al.** *Weed Science,* 2011, vol. 59, 517-526
- Farm Chemicals Handbook 2000. Meister Publishing Company, 2000, vol. 86
- **B. HOCK ; C. FEDTKE ; R. R. SCHMIDT.** Herbizide. Georg Thieme Verlag, 1995
- **W. H. AHRENS.** Herbicide Handbook. Weed Science Society of America, 1994
- **K. K. HATZIOS.** Herbicide Handbook. Weed Science Society of America, 1998
- *CHEMICAL ABSTRACTS,* 52836-31-4
- *CHEMICAL ABSTRACTS,* 71526-07-03
- **COLBY, S. R.** Calculating Synergistic and Antagonistic Responses in Herbicide Combinations. *Weeds,* 1967, vol. 15, 21-22